# EUROPEAN PATENT SPECIFICATION

(11) **EP 0 493 018 B1**
(45) Date of publication and mention of the grant of the patent: **13.09.1995**
(21) Application number: 91311866.7
(22) Date of filing: 20.12.1991
(51) Int. Cl.: B29B 17/00

(54) **System and method for densifying expanded plastic foam materials**
Vorrichtung und Verfahren zum Verdichten von expandierten Kunststoffschaummaterialien
Installation et méthode pour la densification des matériaux à base de mousse de plastique expansée

(30) Priority: 21.12.1990 US 632951
(43) Date of publication of application: 01.07.1992
(73) Proprietor: Free-Flow Packaging International, Inc., Redwood City California 94063 (US)
(72) Inventor: Fuss, Gunter G., San Mateo, California 94401 (US)
(74) Representative: Flegg, Christopher Frederick

(56) References cited:
- WO-A-91/07264
- AT-A- 342 958
- FR-A- 2 233 161
- US-A- 4 254 068
- PATENT ABSTRACTS OF JAPAN vol. 9, no. 11 (M-351)(1734) 18 January 1985 & JP-A-59 159 313 (MORUTON HANBAI K.K.)

## Description

This invention pertains generally to expanded plastic foam materials and, more particularly, to a system and method for densifying expanded thermoplastic foams for recycling or disposal.

Loose fill packing materials, such as so-called "Styrofoam peanuts", which are widely used in the packing and shipment of delicate items present a problem from the standpoint of disposal. A similar problem is presented by disposable food and drink service items of the type commonly used in the fast food industry, e.g. cups, plates, bowls and the "clamshell" containers in hot food products such as hamburgers, french fries and pizza are sometimes served. These materials occupy relatively large volumes and are commonly made of expanded thermoplastic foams such as polystyrene or polyethylene which do not make good land fill and are not biodegradable. A similar problem also exists in the disposal of larger blocks of expanded foam such as the molded blocks which are sometimes used in the packaging of larger products.

Largely because of the problems in disposing of loose fill packing materials and food and drink containers made of expanded foam, there has been some interest in recycling them. However, this has generally not been feasible from an economic standpoint because of the expense of transporting the relatively large volumes of material involved.

It is in general an object of the invention to provide a system and method for densifying expanded plastic foams, such as loose fill packing materials, food and beverage service items, and larger blocks of such materials, to make it easier to recycle and/or dispose of them.

Another object of the invention is to provide a system and method of the above character which are economical and efficient in operation.

It is known from Patent Abstracts of Japan, vol. 9, no. 11, (M - 351) (1734) to provide a system for densifying an expanded plastics foam material by the use of heat, comprising a hopper for receiving the foam material to be densified and means for blowing heated air through the foam material.

The material is however melted into a highly viscous resin.

According to the present invention such a system is characterised by a vertically extending chute having a cylindrical side wall of perforate material extending in downward direction from the outlet of the hopper, and means for blowing heated air through the cylindrical side wall and through the foam material in the chute at a temperature which will soften the foam material without melting it.

The above mentioned objects are achieved in accordance with the invention by heating the expanded foam material to soften the material and expel gas from cells within the material to shrink the material to a reduced volume. In some embodiments, the material is further densified by compacting the heat softened material to further reduce the volume of the material.

Figure 1 is a side elevational view, partly broken away, of one embodiment of a system according to the invention.

Figure 2 is a schematic illustration of another embodiment of a system according to the invention.

Figure 3 is a schematic illustration of another embodiment of a system according to the invention.

The types of materials which can be densified in accordance with the invention include all types of thermoplastic foams, including polystyrene foams and polyethylene foams. These can be in any form such as loose fill packing materials, food and beverage service items, blocks and the like. In the case of loose fill packing materials, the individual particles or pieces of the material can have a wide variety of shapes or forms, although the invention is particularly effective with materials formed in the shape of a three dimensional figure eight as shown in U.S. Patent 3,855,053. In the case of food or beverage service items and larger blocks, the materials are advantageously broken into pieces about three-quarters of an inch in diameter before being processed.

Thermoplastics of the type which are advantageously densified in accordance with the invention have a cellular structure and in their foamed or expanded state typically have cell sizes ranging from about 0.025 to 0.254mm (0.001 to about 0.1 inch), void spaces occupying from about 25 to about 85 percent of the total volume of the foam, and a foam density ranging from about 2.403 to 24.03 kg/m³ (0.15 to about 1.5 pounds per cubic foot).

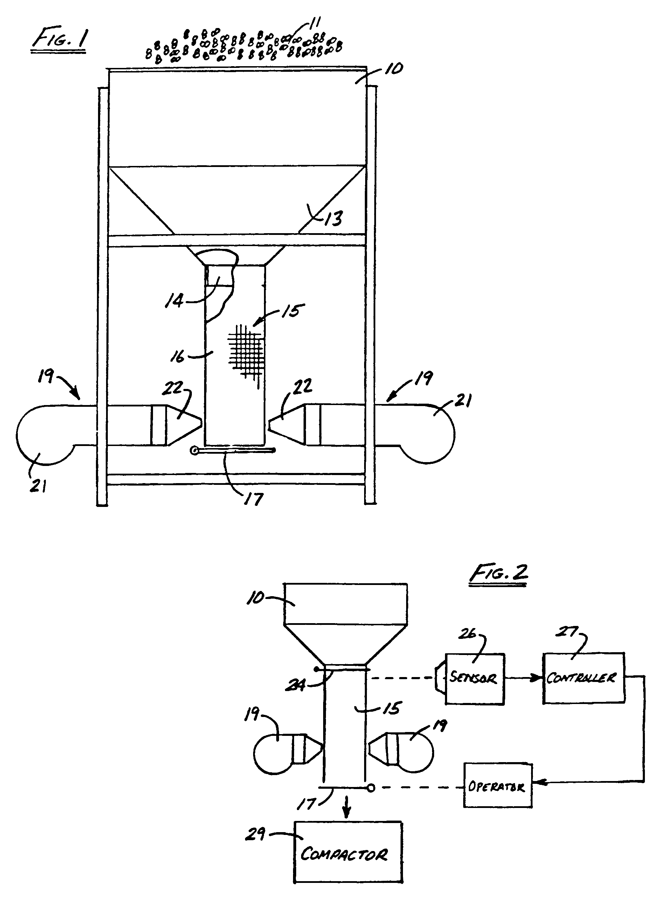

As illustrated in Figure 1, the system includes a hopper 10 having an open upper side for receiving the material 11 to be densified. The hopper has a rectangular configuration in plan view, with a sloping bottom wall 13 and a discharge opening or outlet 14 at the lower end of the bottom wall.

A chute 15 having a perforate side wall 16 extends in a downward direction from the outlet of the hopper. The chute is fabricated of a material having a relatively low thermal conductivity to which the packing material does not readily adhere when heated, and in one presently preferred embodiment, it is fabricated of a fiberglass mesh which is coated with Teflon (polytetrafluoroethylene). ("Teflon" is a registered trade mark). The openings in the mesh are smaller than the material to be densified so the material will not pass through the mesh.

A pivotally mounted door 17 forms a closure at the lower end of the chute and is movable between a horizontal or closed position and a vertical or open position. In the closed position, this door prevents the unprocessed particles of material from passing through the chute without being processed.

Means is provided for heating the material in the lower portion of the chute to a temperature on the order of 300 to 350°F (149 to 177°C). In the embodiment illustrated, this means includes a pair of hot air blowers 19 positioned on opposite sides of the chute toward the lower end thereof. Each of these heat sources includes an electrically energized heating element (not shown), a blower 21 and a discharge nozzle 22 for directing the heated air through the chute in a transverse direction. It is important that the dimensions of the chute and the amount of air discharged from the heat sources be such that the hot air reaches the material in the center of the chute as well as near the sides, and in one presently preferred embodiment, the chute has a width on the order of 152.4mm (6 inches), a depth on the order of 304.8mm (12 inches), and a height on the order of 457.2mm (18 inches), with the heat source nozzles and running the full depth of the chute and being positioned a few inches above the closure door at the bottom of the chute. With the nozzles so positioned, the hot air only needs to travel about 76.2mm (3 inches) through the material to reach all of the particles, thereby assuring relatively uniform heating of the material.

Operation and use of the system of Figure 1, and therein the method of the invention, are as follows. Door 17 is closed, and a measured quantity or batch of the material to be processed is poured into the hopper and flows by gravity into the chute. The heat sources are energized, and the hot air from the sources passes through the material in the lower portion of the chute, softening the material and allowing the gas to escape from the cells of the material. This causes the material to shrink to a reduced volume, and as it does, the material above it moves into the heat zone and is likewise shrunk. The shrunken material collects in the form of a heat softened mass below the heat source nozzles in the lower portion of the chute, and when all of the material in the batch has been processed, the door is opened to discharge the shrunken material.

Although the exact mechanism by which the gas escapes from the cells is not known for certain, it is believed that the heating of the thermoplastic material breaks down the walls of the cells and permits the gas to escape through them.

The reduction in volume provided by the system is significant. For example, 0.1132m³ (four cubic feet) of polystyrene foam particles having the shape of a figure eight is reduced to a volume on the order of 1393 to 1884cc (85 to 115 cubic inches), a reduction of about 60 to 80 times. This amount of material is processed in approximately 2.5 minutes, which corresponds to a rate of approximately 2.718m³ per hour (96 cubic feet per hour).

The throughput of the system can be increased by increasing the depth of the chute and by increasing the size and/or the number of the heat sources. As the size of the system is increased, however, it is important that the heat sources still be arranged so that the hot air reaches all of the particles in the material to be densified.

If desired, other types of heat sources can be utilized instead of the electrically energized hor air blowers shown in Figure 1. For example, a gas burner can be employed to produce a hot air stream, or the foam particles can be heated with superheated steam if the steam is pressurized to increase its temperature to the range of 149 to 177°C (300-350°F). It might also be possible to heat the foam material in a convection oven or to heat it with infrared radiation provided it is tumbled or stirred to expose all of the particles to the radiation.

While the invention works particularly well with particles having the configuration of a three dimensional figure eight, it can also be used very effectively with other shapes of loose fill materials, e.g. "peanuts", "shells", etc., and other products made of thermoplastic foam. However, it works particularly well with the figure eight shape because the openings in the figure eight facilitate the flow of hot air to the cells throughout the material.

The embodiment illustrated in Figure 2 is generally similar to the embodiment of Figure 1, and like reference numerals designate corresponding elements in the two figures. The embodiment of Figure 2, however, has an upper gate 24 for controlling the flow of material from the hopper to the chute. For ease of illustration, this gate is shown as a hinged door, but in practice it can be any suitable type of gate such as a finger gate having a plurality of horizontally extensible and retractable fingers which intermesh to form a closure.

The embodiment of Figure 2 also has a sensor 26 for detecting the absence of material in the upper portion of the chute and a programmable controller 27 which controls the operation of the door 17 at the lower end of the chute. The controller responds to a signal from the sensor when all of the material has passed through the upper portion of the chute and, after an interval of time sufficient to process the material in the chute, opens the door to discharge the processed material from the chute.

The embodiment of Figure 2 also includes a compactor 29 which receives the densified material discharged through door 17 and compacts it by compressing the particles of the heat softened material together to further reduce the volume of the material. The compactor typically reduces the volume of the heated material by an additional factor of 2-3, providing an overall densification on the order of 120 to 150 times. The compactor can be of any suitable type and can, for example, be mechanically, hydraulically or pneumatically operated.

In operation, lower door 17 is closed, and the material to be processed is poured into the hopper. Gate 24 is opened if it is not open already to pass the material to the chute, and the heat sources are energized to densify the material in the lower portion of the chute as in the embodiment of Figure 1. As the material in the lower portion of the chute is densified, the material above it falls into the heat zone and is likewise processed. When a desired amount of material has been processed, gate 24 is closed to interrupt the flow of material into the chute. When the absence of material in the upper portion of the chute is detected by the sensor, controller 27 starts a timing interval, and at the end of this interval door 17 is opened, delivering the densified material which has collected at the bottom of the chute to the compactor. Thereafter, door 17 is closed and gate 24 is open to resume the flow of material into the chute. This system provides a semi-continuous operation in that the material is processed continuously in successive batches.

If desired, the system can be operated in a fully continuous mode by eliminating the upper gate and replacing the lower door with rollers or other suitable means for passing the densified materials but not the larger unprocessed materials.

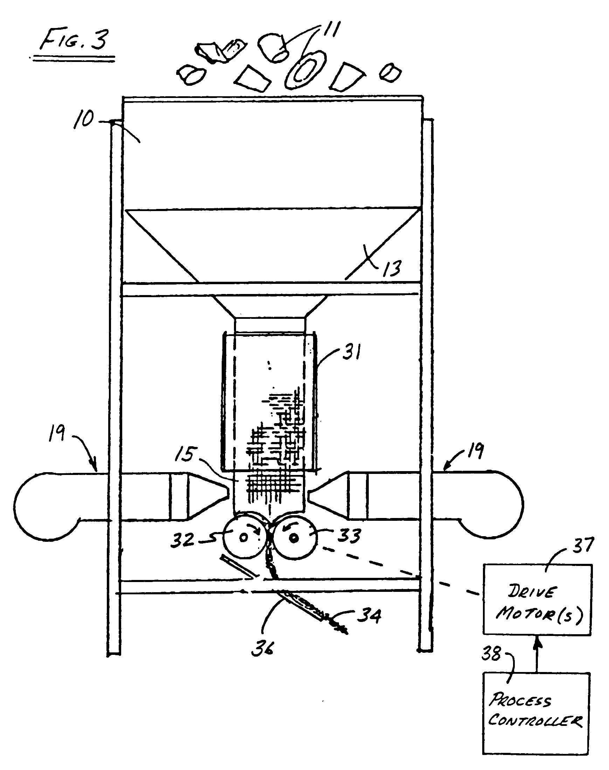

The embodiment illustrated in Figure 3 is generally similar to the embodiments of Figures 1 and 2, and like reference numerals designate corresponding elements in theis figure as well. The embodiment of Figure 3 is, however, particularly suitable for use in densifying the thermoplastic foam from products such as food and beverage service items, although it can be used for loose fill packing materials, larger blocks and other foam materials as well. As in the embodiments of Figures 1 and 2, larger pieces of the material are preferably broken or ground into smaller pieces before being introduced into the hopper 10.

In the embodiment of Figure 3, a generally cylindrical enclosure 31 surrounds the upper portion of the chute and prevents rising hot air from leaving the chute prematurely, thus assuring maximum heat transfer to the particles of material within the chute. The enclosure is fabricated of an insultaive material such as mill board with a reflective inner surface formed by a layer of aluminium foil or other suitable reflective material. If desired, one or more windows can be provided in the enclosure to permit observation of the material within the upper portion of the chute. Such windows can be made of an optically transparent, heat resistant material such as Pyrex glass. The enclosure is preferably positioned close to the chute (e.g. 12.7mm (1/2 inch) away) to keep as much hot air as possible inside the chute.

A pair of counter-rotating rollers 32, 33 are provided at the lower end of the chute to control the discharge of densified material from the chute. The rollers are positioned with the confronting portions of their surfaces approximately 6.35mm (1/4inch) apart to permit the softened and densified material, but not the unprocessed material, to pass between the same. The densified material is discharged from the rollers in the form of a softened ribbon 34 having a width corresponding to that of the chute and is guided away from the rollers by an inclined deflector plate 36. The densified material hardens shortly after leaving the rollers and can be ground up or otherwise processed as desired.

The surfaces of the rollers are preferably coated with a material such as silicone to prevent the densified material from sticking thereto, and the lower end of the chute is contoured to match the rollers to prevent the material from escaping between the chute and the rollers.

The rollers are driven in counter rotating fashion by a suitable motor or motors 37. In the embodiment illustrated in Figure 3, the rollers turn at a substantially constant speed when actuated, and the length of time the material remains in the chute and is exposed to the hot air is controlled by operating the rollers in a cyclical fashion. In this particular embodiment, operation of the drive motor is controlled by a process controller 38, which is programmable to provide optimum heating and discharge times for different materials. For food and beverage service items, the rollers might, for example, operate for 1-1/2 seconds with 5 seconds between successive discharges, whereas for loose fill packing materials, they might operate for 3 seconds with 5 seconds between discharges.

Alternatively, the rollers can be driven continuously by a variable speed motor, with the speed of the motor being adjusted to keep the material in the chute for the optimum time for densification. The motor speed can be adjusted manually in accordance with visual observation of the discharging material, or it can be regulated by a suitable control system.

The invention has a number of important features and advantages. The heating alone reduces the volume of the foam material by a factor on the order of 60 to 80 times, and when the heated material is compacted, the reduction in volume is on the order of 120 to 150 times. This significantly reduces the volume of such materials to be disposed of in land fill sites and makes it economically feasible to transport the material to a facility for recycling.

It is apparent from the foregoing that a new and improved system and method for densifying thermoplastic foam materials have been provided. While only certain presently preferred embodiments have been described in detail, as will be apparent to those familiar with the art, certain changes and modifications can be made without departing from the scope of the invention as defined by the following claims.

## Claims

1. A system for densifying an expanded plastics foam material by the use of heat, comprising a hopper (10) for receiving the foam material (11) to be densified and means for blowing heated air through the foam material characterised by, a vertically extending chute (15) having a cylindrical side wall (16) of perforate material extending in downward direction from the outlet (14) of the hopper (10), and means (19) for blowing heated air through the cylindrical side wall and through the foam material in the chute at a temperature which will soften the foam material without melting it.

2. A system as claimed in claim 1 including a gate (24) at the upper end of the chute (15) for controlling delivery of the foam material from the hopper (10) to the chute, a closure (17) at the lower end of the chute for holding the foam material in the chute, means for opening the closure (17) to discharge a batch of the foam material from the chute after it has been heated and shrunk, and means for closing the gate (24) while the foam material is discharged to prevent the delivery of foam material to the chute when the closure is open.

3. A system as claimed in claim 2 including a sensor (26) for detecting the absence of foam material in the upper portion of the chute, and means (27) responsive to the sensor for opening the closure (17) a predetermined time after the absence of foam material is detected.

4. A system as claimed in any preceding claim including an insulative enclosure (31) surrounding an upper portion of the chute (15) to prevent rising hot air from escaping from the chute.

5. A system as claimed in any preceding claim comprising means (17,29,32,33) for compacting the softened foam material to reduce the volume of the foam material.

6. A system as claimed in claim 5 including a pair of rollers (32,33) at the lower end of the chute (15) spaced apart by a distance less than the size of a particle of foam material to be densified, and means (37) for rotating the rollers in opposite direction to discharge the heated and shrunk foam material from the chute between the rollers.

7. A system as claimed in any of the preceding claims, further characterised in that the means for blowing heated air includes means for blowing the air at a temperature on the order of 149 to 177°C (300 to 350°F).

8. A method of densifying an expanded plastics foam material by the use of heat, comprising the steps of receiving the foam material (11) to be densified in a hopper (10) and blowing heated air through the foam material, characterised by the steps of delivering the material from the hopper in a downward direction through a vertically extending chute (15) having a cylindrical side wall (16) of perforate material and blowing heated air through the cylindrical side wall and through the foam material in the chute at a temperature which softens the foam material without melting it.

9. A method as claimed in claim 8 including the steps of directing the heated air through the cylindrical side wall (16) near the lower end of the chute to shrink the foam material in the lower portion of the chute, allowing successive portions of the foam material to drop into the lower portion of the chute to be heated and softened, and collecting the foam material which has been heated and softened in the lower portion of the chute.

10. A method as claimed in claim 8 including the steps of monitoring the upper portion of the chute (15) to detect the absence of foam material in the upper portion, and discharging the collected foam material from the lower portion of the chute a predetermined time after the absence of foam material in the upper portion is detected.

11. A method as claimed in any of claims 8 to 10 including the step of surrounding an upper portion of the chute (15) with an insulative enclosure (31) to prevent rising hot air from escaping from the chute.

12. A method as claimed in any of claims 8 to 11 including the further step of compacting the softened foam material to reduce the volume of the foam material.

13. A method as claimed in claim 12 including the steps of collecting the heated and shrunk material at the lower end of the chute (15) on a pair of rollers (32,33) which are spaced apart by a distance less than the size of a particle of material to be densified, and turning the rollers to discharge the heated and shrunk material from the chute between the rollers.

14. A method as claimed in any of claims 8 to 13 wherein the air blown through the material is heated to a temperature on the order of 149 to 177°C (300 to 350°F).

## Patentansprüche

1. Anordnung zum Verdichten expandierten Kunststoffschaums durch Anwendung von Wärme, mit einem Bunker (10) zur Aufnahme des zu verdichtenden Kunststoffschaums (11) und einer Einrichtung zum Blasen erwärmter Luft durch den Kunststoffschaum, gekennzeichnet durch einen in vertikaler Richtung verlaufenden Bunkerauslauf (15) mit einer zylindrischen Seitenwand (16) aus perforiertem Material, die sich vom Auslaß (14) des Bunkers (10) nach unten erstreckt, und eine Einrichtung (19) zum Blasen erwärmter Luft durch die zylindrische Seitenwand und durch den Kunststoffschaum in dem Bunkerauslauf mit einer Temperatur, bei der der Kunststoffschaum erweicht, ohne zu schmelzen.

2. Anordnung nach Anspruch 1, mit einem Schieber (24) am oberen Ende des Bunkerauslaufs (15) zum Steuern der Zufuhr des Kunststoffschaums aus dem Bunker (10) in den Bunkerauslauf, einem Verschluß (17) am unteren Ende des Bunkerauslaufs zum Halten des Kunststoffschaums in dem Bunkerauslauf, einer Einrichtung zum Öffnen des Verschlusses (17) zum Entladen einer Charge des Kunststoffschaums aus dem Bunkerauslauf, nachdem er erwärmt wurde und geschrumpft ist, und einer Einrichtung zum Schließen des Schiebers (24), während der Kunststoffschaum entladen wird, so daß die Zufuhr von Kunststoffschaum zum Bunkerauslauf bei offenem Verschluß verhindert wird.

3. Anordnung nach Anspruch 2, mit einem Fühler (26) zum Erfassen des Fehlens von Kunststoffschaum im oberen Bereich des Bunkerauslaufs, und einer Einrichtung (27), die auf den Fühler anspricht und den Verschluß (17) eine vorbestimmte Zeit nach Erfassen des Fehlens des Kunststoffschaums öffnet.

4. Anordnung nach einem der vorstehenden Ansprüche, mit einer isolierenden Hülle (31), die den oberen Bereich des Bunkerauslaufs (15) umschließt und aufsteigende Warmluft am Entweichen aus dem Bunkerauslauf hindert.

5. Anordnung nach einem der vorstehenden Ansprüche, mit Einrichtungen (17, 29, 32, 33) zum Pressen des erweichten Kunststoffschaums zur Verminderung des Volumens desselben.

6. Anordnung nach Anspruch 5, mit zwei Walzen (32, 33) am unteren Ende des Bunkerauslaufs (15), deren Abstand kleiner ist als die Größe eines Teilchens des zu verdichtenden Kunststoffschaums, und einer Einrichtung (37) zum Antreiben der Walzen in gegenläufiger Richtung derart, daß der erwärmte und geschrumpfte Kunststoffschaum zwischen den Walzen aus dem Bunkerauslauf entladen wird.

7. Anordnung nach einem der vorstehenden Ansprüche, dadurch gekennzeichnet, daß die Einrichtung zum Blasen erwärmter Luft eine Einrichtung zum Blasen der Luft mit einer Temperatur in der Größenordnung von 149 bis 177°C (300 bis 350°F) aufweist.

8. Verfahren zum Verdichten expandierten Kunststoffschaums durch Anwendung von Wärme, bei dem der zu verdichtende Kunststoffschaum (11) in einem Bunker (10) aufgenommen und erwärmte Luft durch den Kunststoffschaum geblasen wird, gekennzeichnet durch die Schritte:
- Zuführen des Kunststoffschaums aus dem Bunker abwärts durch einen vertikal verlaufenden Bunkerauslauf (15) mit einer zylindrischen Seitenwand (16) aus perforiertem Material und
- Blasen von erwärmter Luft durch die zylindrische Seitenwand und durch den Kunststoffschaum in dem Bunkerauslauf mit einer Temperatur, bei der der Kunststoffschaum erweicht, ohne zu schmelzen.

9. Verfahren nach Anspruch 8, mit den Schritten:
- Richten der erwärmten Luft durch die zylindrische Seitenwand (16) in der Nähe des unteren Endes des Bunkerauslaufs, so daß der Kunststoffschaum im unteren Bereich des Bunkerauslaufs schrumpft,
- Fallenlassen aufeinander folgender Teile des Kunststoffschaums in den unteren Bereich des Bunkerauslaufs, so daß sie erwärmt und erweicht werden, und
- Sammeln des erwärmten und erweichten Kunststoffschaums im unteren Teil des Bunkerauslaufs.

10. Verfahren nach Anspruch 8, mit den Schritten:
- Überwachen des oberen Teils des Bunkerauslaufs und Erfassen des Fehlens von Kunststoffschaum im oberen Bereich, und
- Abführen des gesammelten Kunststoffschaums vom unteren Bereich des Bunkerauslaufs eine bestimmte Zeit nach Erfassen des Fehlens von Kunststoffschaum im oberen Bereich.

11. Verfahren nach einem der Ansprüche 8 bis 10, mit dem Schritt: Umschließen eines oberen Bereichs des Bunkerauslaufs (15) mit einer isolierenden Hülle (31) zur Verhinderung des Entweichens aufsteigender Warmluft aus dem Bunkerauslauf.

12. Verfahren nach einem der Ansprüche 8 bis 11, mit dem weiteren Schritt: Pressen des erweichten Kunststoffschaums zur Verminderung seines Volumens.

13. Verfahren nach Anspruch 12, mit den Schritten:
- Sammeln des erwärmten und geschrumpften Kunststoffschaums am unteren Ende des Bunkerauslaufs (15) auf zwei Walzen (32, 33), deren Abstand geringer ist, als die Teilchengröße des zu verdichtenden Kunststoffschaums, und
- Drehen der Walzen zum Entladen des erwärmten und geschrumpften Kunststoffschaums aus dem Bunkerauslauf zwischen den Walzen.

14. Verfahren nach einem der Ansprüche 8 bis 13, wobei die durch den Kunststoffschaum geblasene Luft auf eine Temperatur in der Größenordnung von 149 bis 177°C (300 bis 350°F) erhitzt wird.

## Revendications

1. Système de densification d'une matière plastique alvéolaire expansée à l'aide de chaleur, comprenant une trémie (10) de réception de la matière alvéolaire (11) devant être densifiée et un moyen de soufflage d'air chaud dans la matière alvéolaire, caractérisé par une goulotte verticale (15) comprenant une cloison latérale cylindrique (16) en matériau perforé qui part vers le bas de la sortie (14) de la trémie (10) et un moyen (19) pour souffler de l'air chauffé à travers la cloison latérale cylindrique et à travers la matière alvéolaire se trouvant dans la goulotte à une température qui ramollit la matière alvéolaire sans la faire fondre.

2. Système selon la revendication 1, comprenant à l'extrémité supérieure de la goulotte (15) une porte (24) de commande de l'envoi de matière alvéolaire de la trémie (10) dans la goulotte, un obturateur (17) placé à l'extrémité inférieure de la goulotte pour retenir la matière alvéolaire dans la goulotte, un moyen pour ouvrir l'obturateur (17) afin de décharger un lot de la matière alvéolaire de la goulotte après qu'elle a été chauffée et s'est contractée, ainsi qu'un moyen pour fermer la porte (24) pendant que la matière alvéolaire est déchargée afin d'empêcher l'envoi de matière alvéolaire dans la goulotte lorsque l'obturateur est ouvert.

3. Système selon la revendication 2, comprenant un détecteur (26) de détection de l'absence de matière alvéolaire dans la partie supérieure de la goulotte et un moyen (27) répondant au détecteur pour ouvrir l'obturateur (17) à la fin d'un temps prédéterminé après que l'absence de matière alvéolaire a été détectée.

4. Système selon l'une quelconque des revendications précédentes, comprenant une enveloppe isolante (31) entourant une partie supérieure de la goulotte (15) afin d'empêcher l'air ascendant chaud de s'échapper de la goulotte.

5. Système selon l'une quelconque des revendications précédentes, comprenant des moyens (17, 29, 32, 33) de compactage de la matière alvéolaire ramollie afin de réduire le volume de la matière alvéolaire.

6. Système selon la revendication 5, comprenant deux rouleaux (32, 33) placés à l'extrémité inférieure de la goulotte (15) et placés l'un par rapport à l'autre à une distance inférieure à la dimension d'une particule de matière alvéolaire devant être densifiée, ainsi qu'un moyen (37) pour faire tourner les rouleaux en sens opposés afin de décharger de la goulotte et entre les rouleaux la matière alvéolaire qui a été chauffée et s'est contractée.

7. Système selon l'une quelconque des revendications précédentes, caractérisé par ailleurs en ce que le moyen de soufflage d'air chauffé comprend des moyens pour souffler l'air à une température de l'ordre de 149 à 177°C (300 à 350°F).

8. Procédé de densification d'une matière plastique alvéolaire expansée à l'aide de chaleur, comprenant les étapes de réception de la matière alvéolaire (11) devant être densifiée dans une trémie (10) et de soufflage d'air chauffé à travers la matière alvéolaire, caractérisé par les étapes d'envoi de la matière provenant de la trémie vers le bas dans une goulotte verticale (15) comprenant une cloison latérale cylindrique (16) en matériau perforé et de soufflage d'air chauffé à travers la cloison latérale cylindrique et à travers la matière alvéolaire se trouvant dans la goulotte à une température qui ramollit la matière alvéolaire sans la faire fondre.

9. Procédé selon la revendication 8, comprenant les étapes d'envoi de l'air chauffé à travers la cloison latérale cylindrique (16) à proximité de l'extrémité inférieure de la goulotte afin de provoquer la contraction de la matière alvéolaire dans la partie inférieure de la goulotte, d'autorisation donnée à des parties successives de la matière alvéolaire de tomber dans la partie inférieure de la goulotte afin d'être chauffées et ramollies et d'accumulation de la matière alvéolaire qui a été chauffée et ramollie dans la partie inférieure de la goulotte.

10. Procédé selon la revendication 8, comprenant les étapes de contrôle de la partie supérieure de la goulotte (15) afin de détecter l'absence de matière alvéolaire dans la partie supérieure et de décharge de la matière alvéolaire recueillie à la partie inférieure de la goulotte à la fin d'un temps prédéterminé après que l'absence de matière alvéolaire dans la partie supérieure a été détectée.

11. Procédé selon l'une quelconque des revendications 8 à 10, comprenant l'étape d'enveloppement d'une partie supérieure de la goulotte (15) par une enveloppe isolante (31) afin d'empêcher l'air ascendant chaud de s'échapper de la goulotte.

12. Procédé selon l'une quelconque des revendications 8 à 11, comprenant l'étape complémentaire de compactage de la matière alvéolaire ramollie afin de réduire le volume de la matière alvéolaire.

13. Procédé selon la revendication 12, comprenant les étapes d'accumulation de la matière qui a été chauffée et s'est contractée à l'extrémité inférieure de la goulotte (15) sur deux rouleaux (32, 33) qui sont placés l'un par rapport à l'autre à une distance qui est inférieure à la dimension d'une particule de matière devant être densifiée et d'entraînement en rotation des rouleaux pour décharger de la goulotte et entre les rouleaux la matière qui a été chauffée et s'est contractée.

14. Procédé selon l'une quelconque des revendications 8 à 13, suivant lequel l'air soufflé dans la matière est chauffé à une température de l'ordre de 149 à 177°C (300 à 350°F).
